# EUROPEAN PATENT APPLICATION

(11) **EP 1 702 951 A1**
(43) Date of publication of application: **20.09.2006**
(21) Application number: 05703357.3
(22) Date of filing: 07.01.2005
(51) Int. Cl.: C08L 23/08, C08L 23/04, C08L 53/00

(54) **THERMOPLASTIC ELASTOMER COMPOSITION AND MOLDED ARTICLE THEREOF**

(30) Priority: 09.01.2004 JP 2004004347
(71) Applicant: JSR Corporation, Tokyo 104-8410 (JP)
(72) Inventor: KANAE, Kentarou c/o JSR CORPORATION, Chuo-ku, Tokyo 1048410 (JP); MAEDA, Minoru c/o JSR CORPORATION, Chuo-ku, Tokyo 1048410 (JP); ABE, Yutaka c/o JSR CORPORATION, Chuo-ku, Tokyo 1048410 (JP)
(74) Representative: TBK-Patent
(86) International application number: PCT/JP2005/000089
(87) International publication number: WO 2005/066264

(57) **Abstract**

According to the present invention, there are provided a thermoplastic elastomer composition which includes (A1) an ethylene·α-olefin-based copolymer or (X) an oil-extended rubber, (B) a crystalline polyethylene type resin, (C) a first hydrogenated block copolymer, and (D) a second hydrogenated block copolymer, and may further includes (E1) a mineral oil type softening agent; and a molded article thereof. The thermoplastic elastomer composition and the molded article are superior in rubber elasticity (compression set), mechanical strength and moldability and, when containing a mineral oil type softening agent, is low in oil bleeding.

## Description

### Technical Field

The present invention relates to a non-crosslinked type thermoplastic elastomer composition which is superior in rubber plasticity (compression set) and moldability and, when containing a mineral oil type softening agent, low in oil bleeding particularly under high strain, as well as to a molded article produced from the composition.

### Background Art

Rubber materials and thermoplastic elastomer compositions have been widely used as a high-molecular material superior in flexibility and rubber elasticity.
A dynamically crosslinked type thermoplastic elastomer obtained from a copolymer of ethylene and an α-olefin (e.g. propylene) and an olefin resin has flexibility and excellent rubber properties and moreover requires no vulcanization step; therefore, the elastomer can be made into a molded article by an ordinary molding method of thermoplastic resin, such as injection molding, profile extrusion molding, calendering, blow molding or the like. Accordingly, in recent years, the dynamically crosslinked type thermoplastic elastomer is expanding its demand, from standpoints of energy saving, resource saving and recycling, as a substitute material for vulcanized rubber or vinyl chloride resin, used in an automobile part, an industrial material, an electrical or electronic part, a building material, etc.
However, the dynamically crosslinked type thermoplastic elastomer possesses many problems to be solved, such as complicated production process, high cost of usable crosslinking agent and limited application due to contamination by crosslinking agent used, etc.

Hence, there was developed an olefin-based, non-crosslinked type thermoplastic elastomer in which a crystalline polyethylene type resin and a conjugated diene-based block copolymer form a three-dimensional network in a matrix composed of an ethylene·α-olefin-based copolymer (see, for example, Patent literature 1). This thermoplastic elastomer, as compared with ordinary non-crosslinked type thermoplastic elastomers, is greatly improved in compression set. However, even in this olefin-based non-crosslinked type thermoplastic elastomer composition, the compression set has not yet been fully satisfactory.
Further, the olefin-based non-crosslinked type thermoplastic elastomer composition, when containing a softening agent, has had a problem of oil bleeding particularly under high temperature and compressed conditions. Patent literature 1: WO01/064784

### Disclosure of the Invention

The present invention has been made in view of the above-mentioned problems of prior art, and aims at providing a non-crosslinked type thermoplastic elastomer composition which is superior in rubber plasticity (compression set), mechanical strength and moldability and, when containing a mineral oil type softening agent, low in oil bleeding, and a molded article produced from the composition.

According to the present invention, there is provided a thermoplastic elastomer composition which comprises:
(A1) an ethylene·α-olefin-based copolymer: 20 to 90 parts by mass,
(B) a crystalline polyethylene type resin: 1 to 40 arts by mass,
(C) a hydrogenated block copolymer (hereinafter, this may be referred to as the first hydrogenated block copolymer) obtained by hydrogenating a block copolymer comprising, at each of the two ends, a conjugated diene polymer block having a 1,2-vinyl configuration content of 25% or less and, as the intermediate block, a conjugated diene polymer block having a 1,2-vinyl configuration content of more than 25%: 1 to 30 parts by mass,
(D) a hydrogenated block copolymer (hereinafter, this may be referred to as the second hydrogenated block copolymer) obtained by hydrogenating a block copolymer comprising at least two (1) vinyl aromatic polymer blocks and at least one (2) conjugated diene polymer block or copolymer block of a vinyl aromatic compound and a conjugated diene compound: 1 to 40 parts by mass [the total of (A1), (B), (C) and (D) are 100 parts by mass], and
(E1) a mineral oil type softening agent: 0 to 400 parts by mass.
According to the present invention, there is also provided a thermoplastic elastomer composition which comprises:
(X) an oil-extended rubber comprising 20 to 80% by mass of (A2) an ethylene·α-olefin-based copolymer and 20 to 80% by mass of (E2) a mineral oil type softening agent [(A2) + (E2) = 100% by mass]: 20 to 90 parts by mass,
(B) a crystalline polyethylene type resin: 1 to 40 parts by mass,
(C) a hydrogenated block copolymer (hereinafter, this may be referred to as the first hydrogenated block copolymer) obtained by hydrogenating a block copolymer comprising, at each of the two ends, a conjugated diene polymer block having a 1,2-vinyl configuration content of 25% or less and, as the intermediate block, a conjugated diene polymer block having a 1,2-vinyl configuration content of more than 25%: 1 to 30 parts by mass,
(D) a hydrogenated block copolymer (hereinafter, this may be referred to as the second hydrogenated block copolymer) obtained by hydrogenating a block copolymer comprising at least two (1) vinyl aromatic polymer blocks and at least one (2) conjugated diene polymer block or copolymer block of a vinyl aromatic compound and a conjugated diene compound: 1 to 40 parts by mass [the total of (X), (B), (C) and (D) are 100 parts by mass], and
(E1) a mineral oil type softening agent: 0 to 400 parts by mass.

The above thermoplastic elastomer compositions are preferred to have been subjected to a dynamic heat treatment. The above thermoplastic elastomer compositions are also preferred to further comprise a crystalline polypropylene.
Further, in the thermoplastic elastomer compositions of the present invention, it is preferred that each of the ethylene·α-olefin-based copolymers (A1) and (A2) shows an intrinsic viscosity [η] of 3.5 to 6.8 dl/g when measured at 135°C in a decalin solvent, and it is also preferred that the first hydrogenated block copolymer (C) contains 5 to 90 parts by mass of the end blocks and 10 to 95 parts by mass of the intermediate block when the total of the end blocks and the intermediate block is taken as 100 parts by mass, at least 80% of the conjugated diene double bonds present before hydrogenation is saturated in the first hydrogenated block copolymer (C), and the first hydrogenated block copolymer (C) has a number-average molecular weight of 50,000 to 700,000.

In the present invention, it is further preferred that the second hydrogenated block copolymer (D) is constituted by (F) a polymer block composed of a vinyl aromatic compound, and (G) a polymer block composed of structural units derived from isoprene and butadiene, in which 80% or more of the unsaturated bonds in chain is hydrogenated and/or (H) a polymer block composed of butadiene, in which 80% or more of the unsaturated bonds in chain is hydrogenated, and is a hydrogenated block copolymer of (F)-(G)-(F) type or (F)-(H)-(F) type.
According to the present invention, there is also provided a molded article obtained by molding one of the above-mentioned thermoplastic compositions.

The thermoplastic elastomer composition and molded article thereof according to the present invention contains no crosslinking agent. Therefore, they give neither odor nor contamination due to the crosslinking agent, are superior in rubber elasticity (compression set), mechanical strength and moldability and, when containing a mineral oil type softening agent, is low in oil bleeding; and have such advantages.

### Best Mode for Carrying Out the Invention

The mode for carrying out the present invention is specifically described below.
The thermoplastic elastomer composition of the present invention comprises, in the first mode, (A1) an ethylene·α-olefin-based copolymer, (B) a crystalline polyethylene type resin, (C) a first hydrogenated block copolymer, (d) a second hydrogenated block copolymer and (E1) a mineral oil type softening agent and, in the second mode, (X) an oil-extended rubber, (B) a crystalline polyethylene type resin, (C) a first hydrogenated block copolymer, (d) a second hydrogenated block copolymer and (E1) a mineral oil type softening agent.
These thermoplastic elastomer compositions are preferred to have been subjected to a dynamic heat treatment.

Each constituent element of the thermoplastic elastomer compositions is described more specifically below.
(A: A1, A2) Ethylene·α-olefin-based copolymer
The ethylene·α-olefin-based copolymer (A) [hereinafter, this may be referred to merely as "EAO-based copolymer (A)] is a copolymer composed mainly of ethylene and an α-olefin of 3 to 10 carbon atoms, other than ethylene. The ethylene content s preferably 50 to 90 mole % when the total of the ethylene and α-olefin contained in the EAO copolymer is taken as 100 mole %. When the ethylene content is more than 90 mole %, the EAO copolymer tends to be insufficient in flexibility; meanwhile, when the ethylene content is less than 50 mole %, the EAO copolymer tends to be insufficient in mechanical strength; thus, such ethylene contents are not preferred.

As the α-olefin of 3 to 10 carbon atoms, there can be mentioned propylene, 1-butene, 1-pentene, 4-methyl-pentene-1, 1-hexene, 1-heptene, 1-octene, 1-decene, etc. Of these, preferred are propylene, 1-butene, 1-hexene and 1-octene; more preferred are propylene and 1-butene. These compounds can be used singly in one kind or in combination of two or more kinds. When an α-olefin of 10 or less carbon atoms is used, its copolymerizability with other monomer is good.
The proportion of the structural unit derived from the α-olefin, in the EAO-based copolymer (A) is preferably 5 to 50 mole %, more preferably 10 to 45 mole %, particularly preferably 15 to 40 mole %. When the proportion of the structural unit derived from the α-olefin is less than 5 mole %, it may be difficult to obtain a rubber elasticity needed for thermoplastic elastomer. Meanwhile, when the proportion of the structural unit derived from the α-olefin is more than 50 mole %, the resulting elastomer may be low in durability.

A non-conjugated diene may be contained as necessary in the EAO-based copolymer (A), in an amount of 0 to 10 mole %. When the proportion of this conjugated diene is more than 10 mole %, the resulting elastomer may be low in durability.
As specific examples of the non-conjugated diene, there can be mentioned straight-chain acyclic dienes such as 1,4-hexadiene, 1,6-hexadiene, 1,5-hexadiene and the like; branched chain acyclic dienes such as 5-methyl-1,4-hexadiene, 3,7-dimethyl-1,6-octadiene, 5,7-dimethylocta-1,6-diene, 3,7-dimethyl-1,7-octadiene, 7-methylocta-1,6-diene, dihydromyrcene and the like; and alicyclic dienes such as tetrahydroindene, methyltetrahydroindene, dicyclopentadiene, bicyclo[2.2.1]-hepta-2,5-diene, 5-methylene-2-norbornene, 5-ethylidene-2-norbornene, 5-propenyl-2-norbornene, 5-isopropylidene-2-norbornene, 5-cyclohexylidene-2-norbornene, 5-vinyl2-norbornene and the like.
These compounds can be used singly in one kind or in combination of two or more kinds.
Of the above non-conjugated dienes, preferred are 1,4-hexadiene, dicyclopentadiene, 5-ethylidene-2-norbornene, etc.

The EAO-based copolymer (A) gives an intrinsic viscosity [η] of 3.5 dl/g or more (preferably 4.0 dl/g or more, more preferably 4.3 dl/g or more) when measured at 135°C in a decalin solvent. When the intrinsic viscosity is less than 3.5 dl/g, the resulting thermoplastic elastomer composition tends to be low in rubber elasticity; meanwhile, when the intrinsic viscosity is more than 6.8 dl/g, the resulting thermoplastic elastomer composition tends to be low in moldability; therefore, such intrinsic viscosities are not preferred.

In the present invention, as the EAO-based copolymer (A), there can be used, besides the above-mentioned bipolymer and terpolymer, for example, a halogenated copolymer obtained by replacing part of the hydrogen atoms possessed by the above bipolymer or terpolymer, with a halogen atom such as chlorine atom, bromine atom or the like; and a graft polymer obtained by graft-polymerizing an unsaturated monomer such as vinyl chloride, vinyl acetate, (meth)acrylic acid, (meth)acrylic acid derivative [e.g. methyl (meth)acrylate, glycidyl (meth)acrylate or (meth)acrylamide], maleic acid, maleic acid derivative (e.g. maleic anhydride, maleimide or dimethyl maleate), conjugated diene (e.g. butadiene, isoprene or chloroprene) or the like, onto the above-mentioned bipolymer, terpolymer or halogenated copolymer. These copolymers may be used singly in one kind or in combination of two or more kinds.

The EAO-based copolymer (A1) used in the first mode of the present invention is replaced, in the second mode, by an oil-extended rubber (X) obtained by adding a mineral oil type softening agent (E2) to an EAO-based copolymer (A2).
When the oil-extended rubber (X) is used in place of the EAO-based copolymer (A1), handling is easy in production of the thermoplastic elastomer composition of the present invention.
In the oil-extended rubber (X), the proportions of the EAO-based copolymer (A2) and the mineral oil type softening agent (E2) are each 20 to 80% by mass, preferably 25 to 75% by mass, more preferably 30 to 70% by mass.

The EAO-based copolymer (A) can be obtained by a medium to low pressure process, for example, by a process which comprises polymerizing ethylene, an α-olefin and a non-conjugated diene in the presence of a catalyst comprising a Ziegler-Natta catalyst, a soluble vanadium compound, an organoaluminum compound and a solvent, with hydrogen being fed as necessary as a molecular weight modifier. The polymerization can be conducted by a gas phase method (a fluidized bed or an agitated bed) or a liquid phase method (a slurry method or a solution method).

As the soluble vanadium compound, there is preferably used, for example, a reaction product between an alcohol and at least one of VOCl₃ and VCl₄. As the alcohol, there can be used methanol, ethanol, n-propanol, isopropanol, n-butanol, sec-butanol, tert-butanol, n-hexanol, n-octanol, 2-ethylhexanol, n-decanol, n-dodecanol, etc. Of these, preferred are alcohols of 3 to 8 carbon atoms.

As the organoaluminum compound, there can be mentioned, for example, triethylaluminum, triisobutylaluminum, tri-n-hexylaluminum, diethylaluminum monochloride, diisobutylaluminum monochloride, ethylaluminum sesquichloride, butylaluminum sesquichloride, ethylaluminum dichloride, butylaluminum dichloride, and methylaluminoxane which is a reaction product between trimethylaluminum and water. Of these, particularly preferred are ethylaluminum sesquichloride, butylaluminum sesquichloride, a mixture of ethylaluminum sesquichloride and triisobutylaluminum, and a mixture of triisobutylaluminum and butylaluminum sesquichloride.
As the solvent, hydrocarbons are used preferably. Particularly preferred are n-pentane, n-hexane, n-heptane, n-octane, isooctane and cyclohexane. These solvents can be used singly in one kind or in combination of two or more kinds.

The forms of the EAO-based copolymer (A1) and the oil-extended rubber (X) may each be a bale, a crumbs, pellets and a powder (including a bale-ground product).

### (B) Crystalline polyethylene type resin

The crystalline polyethylene type resin (B) is composed mainly of ethylene and has an ethylene content of 90 to 100 mole %. The crystallinity of the crystalline polyethylene type resin (B) is preferably 10% or more. When the crystallinity is less than 10%, the resulting thermoplastic elastomer composition tends to be inferior in mechanical strength. Further, the crystal melting peak of the resin (B) measured by a differential scanning calorimeter (DSC) is preferably 100°C or more. When the melting peak is less than 100°C, the resulting thermoplastic elastomer composition tends to be inferior in heat resistance and compression set.

As the crystalline polyethylene type resin (B), there can be mentioned, for example, polyethylene and ethylene/α-olefin copolymers wherein the ethylene content is 90 mole % or more and the α-olefin is an α-olefin of 3 to 6 carbon atoms, such as propylene, butene-1, 4-methyl-pentene-1, hexene-1, octene-1 or the like. Of these, the polyethylene may be a resin obtained by any of a high-pressure process and a low-pressure process. The resin (B) may be a mixture of two or more kinds.

### (C) Fist hydrogenated block copolymer

The first hydrogenated block copolymer (C) is obtained by hydrogenating a block copolymer comprising, at each of the two ends, a conjugated diene polymer block having a 1,2-vinyl configuration content of 25% or less (hereinafter, this polymer block may be referred to as A block) and, as the intermediate block, a conjugated diene polymer block having a 1,2-vinyl configuration content of more than 25% (hereinafter, this polymer block may be referred to as B block). It is preferred that the first hydrogenated block copolymer (C) contains 5 to 90 parts by mass of the A blocks and 10 to 95 parts by mass of the B block when the total of the A blocks and the B block is taken as 100 parts by mass, that at least 80% of the conjugated diene double bonds present before hydrogenation is saturated in the first hydrogenated block copolymer (C), and that the first hydrogenated block copolymer (C) has a number-average molecular weight of 50,000 to 700,000.

The conjugated diene-based block copolymer (C) is preferably a block copolymer obtained by hydrogenating a copolymer (an A-B-A type block copolymer) having an A block at each of the two ends and a B block between the two A blocks. The A blocks and the B block are blocks before hydrogenation. As to the contents of these blocks when the total of the A blocks and the B block is taken as 100% by mass, the content of the A blocks is preferably 5 to 90% by mass, more preferably 10 to 80% by mass. When the content of the A blocks is less than 5% by mass (the content of the B block is more than 95% by mass), it is difficult to obtain sufficient crystallinity relative to the EAO-based copolymer (1) which is a matrix and form a three-dimensional network structure. Meanwhile, when the content of the A blocks is more than 90% by mass (the content of the B block is less than 10% by mass), there occurs an excessive increase in hardness, which is not preferred.

The A block is a 1,3-butadiene polymer block composed mainly of butadiene (butadiene is 90% or more, preferably 95% or more of the total of the A block). The 1,2-vinyl configuration content in the A block is preferably less than 25%, more preferably 20% or less, further preferably 15% or less. When the 1,2-vinyl configuration content in the A block is 25% or more, a decrease in crystal melting point after hydrogenation is striking, which tends to invite a decrease in mechanical strength. The number-average molecular weight of the A block is preferably 25,000 to 630,000, more preferably 100,000 to 480,000. In the conjugated diene-based block copolymer (C), the A block is hydrogenated and shows a structure similar to that of low-density polyethylene.

The B block is a conjugated diene polymer block composed mainly of a conjugated diene compound (the compound is 50% by mass or more, preferably 60% by mass or more of the total of the B block). As the conjugated diene compound, there can be mentioned 1,3-butadiene, isoprene, 2,3-dimethyl-1,3-butadiene, 1,3-pentadiene, 2-methyl-1,3-pentadiene, 1,3-hexadiene, 4,5-dimethyl-1,3-octadiene, 3-butyl-1,3-octadiene, chloroprene, etc. Of these, preferred are 1,3-butadiene, isoprene and 1,3-pentadiene, and particularly preferred is 1,3-butadiene. The B block may be constituted by two or more kinds of the above compounds.

The 1,2-vinyl configuration content of the B block is preferably more than 25%, more preferably 30 to 95%, further preferably 35 to 90%. When the content is 25% or less, the hydrogenated block copolymer (C) has properties similar to resin properties and tends to be low in flexibility. The 1,2-vinyl configuration content in the B block is higher than that in the A block. When the 1,2-vinyl configuration content in the B block is lower than that in the A block, the thermoplastic elastomer composition used in the present invention tends to be low in flexibility. The number-average molecular weight of the B block is preferably 5,000 to 650,000, more preferably 20,000 to 540,000.

When the B block contains therein a vinyl aromatic compound polymer block, the content of the vinyl aromatic compound polymer block is preferably 35% by mass or less, more preferably 30% by mass or less, further preferably 25% by mass or less when the B block total is taken as 100% by mass. By allowing the B block to contain a vinyl aromatic compound polymer block, there occurs an increase in glass transition temperature, which tends to invite a reduction in low-temperature properties and flexibility. The B block, when hydrogenated, becomes a polymer block having a structure similar to that of rubbery ethylene/butene-1 copolymer block or vinyl aromatic compound/ethylene/butene-1 copolymer.

As the vinyl aromatic compound, there can be mentioned styrene, tert-butylstyrene, α-methylstyrene, p-methylstyrene, p-ethylstyrene, divinylbenzene, 1,1-diphenylstyrene, vinylnaphthalene, vinylanthracene, N,N-diethyl-p-aminoethylstyrene, vinylpyridine, etc. Of these, styrene is preferred.

As to the double bonds contained in the conjugated diene-based block copolymer (C) obtained after hydrogenation, the double bonds present before hydrogenation are saturated preferably by at least 80%, more preferably by 90%, further preferably by 95 to 100%. When the double bonds before hydrogenation are saturated by less than 80%, a reduction in thermal stability and durability tends to occur. The number-average molecular weight of the conjugated diene-based block copolymer (C) is preferably 50,000 to 700,000, more preferably 100,000 to 600,000. When the molecular weight is less than 50,000, a reduction in heat resistance, strength, fluidity and processability tends to occur. Meanwhile, when the molecular weight is more than 700,000, a reduction in fluidity, processability and flexibility tends to occur.

The conjugated diene-based block copolymer (C) can be obtained easily, for example, by subjecting a vinyl aromatic compound and a conjugated diene, or a vinyl aromatic compound, a conjugated diene compound and other monomer copolymerizable therewith, to living anion polymerization with an organic alkali metal compound used as a polymerization initiator, in an inert organic solvent such as aliphatic hydrocarbon solvent (e.g. pentane, hexane, heptane or octane), alicyclic hydrocarbon solvent (e.g. cyclopentane, cyclohexane or methylcyclohexane), aromatic hydrocarbon solvent (e.g. benzene, xylene, toluene or ethylbenzene) or the like to produce a block copolymer (hereinafter, this copolymer may be referred to as "before-hydrogenation polymer") and then hydrogenating the block copolymer.

As the organic alkali metal compound as polymerization initiator, there can be mentioned organic lithium compounds, organic sodium compounds, etc. Particularly preferred are organic lithium compounds such as n-butyllithium, sec-butyllithium, tert-butyllithium and the like.
As to the amount of the organic alkali metal compound used, there is no particular restriction, and the amount may be varied as required. The amount is ordinarily 0.02 to 15% by mass, preferably 0.03 to 5% by mass relative to 100% by mass of the monomers used.

The polymerization temperature is ordinarily -10 to 150°C, preferably 0 to 120°C. The atmosphere of the polymerization system is desirably replaced by an inert gas such as nitrogen gas or the like. The polymerization pressure may be a level at which the monomers and solvent used are sufficiently maintained in a liquid phase under the above polymerization conditions, and there is no particular restriction.

In the step of producing a copolymer block containing a vinyl aromatic compound and a conjugated diene compound by polymerizing these compounds, there is no particular restriction as to the method for feeding the monomers (the compounds) into the polymerization system; the monomers can be fed in one portion, continuously, intermittently or in a combination thereof. Further, in producing a copolymer block containing a vinyl aromatic compound and a conjugated diene compound by polymerizing these compounds, the addition amount of other comonomer, the addition amount of polar substance, the number and kind of reactor, and the method for feeding the comonomer may be selected so that the hydrogenated diene-based copolymer obtained, the composition thereof and the molded article of the composition can have desired properties.

The before-hydrogenation polymer of the present invention may be a copolymer obtained by allowing a coupling agent to act on the block copolymer produced as above, to bond the molecular chains of the copolymer via the residue of the coupling agent.

As the coupling agent used, there can be mentioned, for example, divinylbenzene, 1,2,4-trivnylbenzene, epoxidized 1,2-polybutadiene, epoxidized soybean oil, epoxidized linseed oil, benzene-1,2,4-triisocyanate, diethyl oxalate, diethyl malonate, diethyl adipate, dioctyl adipate, dimethyl phthalate, diethyl phthalate, diethyl terephthalate, diethyl carbonate, 1,1,2,2-tetrachloroethane, 1,4-bis(trichloromethyl)benzene, trichlorosilane, methyltrichlorosilane, butyltrichlorosilane, tetrachlorosilane, (dichloromethyl)trichlorosilane, hexachlorodisilane, tetraethoxysilane, tetrachlorotin and 1,3-dichloro-2-propanone. Of these, preferred are divinylbenzene, epoxidized 1,2-polybutadiene, trichlorosilane, methyltrichlorosilane and tetrachlorosilane.

The hydrogenated diene-based copolymer of the present invention is obtained by hydrogenating the above-obtained block copolymer partially or selectively. There is no particular restriction as to the method of hydrogenation and the conditions of the reaction. The hydrogenation is conducted ordinarily at 20 to 150°C at an applied hydrogen pressure of 0.1 to 10 Mpa in the presence of a hydrogenation catalyst.

In this case, the hydrogenation degree can be selected as desired by varying the amount of the hydrogenation catalyst, the hydrogen pressure during hydrogenation, the reaction time, etc. As the hydrogenation catalyst, there can be ordinarily used compounds each containing any of Ib, IVb, Vb, VIb, VIIb and VIII group metals of periodic table; for example, compounds each containing Ti, V, Co, Ni, Zr, Ru, Rh, Pd, Hf, Re or Pt atom. Specifically, there can be mentioned, for example, metallocene type compounds of Ti, Zr, Hf, Co, Ni, Pd, Pt, Ru, Rh, Re or the like; loaded heterogeneous system catalysts obtained by loading a metal such as Pd, Ni, Pt, Rh, Ru or the like on a carrier such as carbon, silica, alumina, diatomaceous earth or the like; homogenous system Ziegler type catalysts which are each a combination of an organic salt or acetylacetone salt of a metal element (e.g. Ni or Co) and a reducing agent (e.g. an organic aluminum); organic metal compounds of complexes of Ru, Rh or the like; and a fullerene or carbon nanotube having hydrogen occluded. Of these, metallocene compounds each containing any of Ti, Zr, Hf, Co and Ni are preferred because hydrogenation is made possible in a homogeneous system in an inert organic solvent. Metallocene compounds each containing any of Ti, Zr and Hf are more preferred. A hydrogenation catalyst obtained by reacting a titanocene compound with an alkyllithium is particularly preferred because it is inexpensive and is a very useful catalyst industrially. The above catalysts may be used in one kind or in combination of two or more kinds. After the hydrogenation, the residual catalyst is removed as necessary or an age resister of phenol type or amine type is added; then, a hydrogenated diene-based copolymer of the present invention is isolated from the hydrogenated diene-based copolymer solution. This isolation of the hydrogenated diene-based copolymer can be conducted, for example, by a method of adding acetone, an alcohol or the like to the hydrogenated diene-based copolymer solution to give rise to sedimentation or by a method of pouring the hydrogenated diene-based copolymer solution into hot water with stirring and then distilling off the solvent.

The conjugated diene-based block copolymer before hydrogenation which, when hydrogenated, becomes the conjugated diene-based block copolymer (C), may be a copolymer wherein a plurality of A-B-A type block copolymers are bonded via a residue of a coupling agent. That is, it may be [A-B-A-X]ₙ-(A-B-A) wherein n is an integer of 2 to 4 and X is a residue of a coupling agent. Further, the before-hydrogenation block copolymer may be [A-B-X]ₙ-(B-A) (n and X have the same definitions as above), when the residue of a coupling agent has a sufficiently small molecular weight as compared with the molecular weights of the A block and the B block and does not affect the crystallinity of the conjugated diene-based block copolymer (C) obtained. That is, the before-hydrogenation block copolymer may be [A-B]ₙ-A when the coupling agent residue of relatively small molecular weight is omitted in expression.

The conjugated diene-based block copolymer (C) may be a functional group-modified block polymer. As the functional group, there can be used at least one member selected from the group consisting of carboxyl group, acid anhydride group, hydroxyl group, epoxy group, halogen atom, amino group, isocyanate group, sulfonyl group and sulfonate group.
The modification ca be conducted by a known method.
The content of the functional group in the functional group-modified block polymer is preferably 0.01 to 10 mole %, more preferably 0.1 to 8 mole %, further preferably 0.15 to 5 mole % when the total of the structural units constituting the block polymer is taken as 100 mole %.
As the monomer preferably used for introduction of the functional group, there can be mentioned acrylic acid, methacrylic acid, itaconic acid, maleic acid, maleic anhydride, glycidyl acrylate, glycidyl methacrylate, allyl glycidyl ether, hydroxyethyl methacrylate, hydroxypropyl methacrylate, hydroxyethyl acrylate, hydroxypropyl acrylate, dimethylaminoethyl methacrylate, etc.

### (D) Second hydrogenated block copolymer

The second hydrogenated block copolymer (D) is a hydrogenated block copolymer obtained by hydrogenating a block copolymer comprising at least two (1) vinyl aromatic polymer blocks and at least one (2) conjugated diene polymer block or copolymer block of a vinyl aromatic compound and a conjugated diene compound. There can be mentioned, for example, hydrogenation products of a block copolymer comprising a polymer block of a vinyl aromatic monomer and a polymer block of a conjugated diene monomer; a block copolymer comprising a polymer block of a vinyl aromatic monomer and a random polymer of a conjugated diene monomer and a vinyl aromatic monomer; a block copolymer comprising a polymer block of a conjugated diene monomer and a copolymer block of a conjugated diene monomer and a vinyl aromatic monomer; a block copolymer comprising a polymer block of a conjugated diene monomer and a taper block which is composed of a vinyl aromatic monomer and a conjugated diene monomer and in which the vinyl aromatic monomer increases gradually; and a block copolymer comprising a random copolymer block of a conjugated diene monomer and a vinyl aromatic monomer and a taper block which is composed of a vinyl aromatic monomer and a conjugated diene monomer and in which the vinyl aromatic monomer increases gradually.

As the vinyl aromatic compound, there can be mentioned styrene, tert-butylstyrene, α-methylstyrene, p-methylstyrene, p-ethylstyrene, divinylbenzene, 1,1-diphenylstyrene, vinylnaphthalene, vinylanthracene, N,N-diethyl-p-aminoethylstyrene, vinylpyridine, etc. Of these, styrene is preferred.
As the conjugated diene compound, there can be mentioned 1,3-butadiene, isoprene, 2,3-dimethyl-1,3-butadiene, 1,3-pentadiene, 2-methyl-1,3-pentadiene, 1,3-hexadiene, 4,5-diethyl-1,3-octadiene, 3-butyl-1,3-octadiene, chloroprene, etc. Of these, preferably used are 1,3-butadiene, isoprene and 1,3-pentadiene.
As the vinyl aromatic polymer block (1), styrene block is preferred.
As the conjugated diene polymer block (2), preferred are butadiene block, isoprene block and random copolymer block of butadiene and isoprene. A combination use of butadiene block and isoprene block is preferred also.

The second hydrogenated block copolymer (D) can be produced easily by a known process. It can be produced, for example, by subjecting a conjugated diene and a vinyl aromatic compound to living anion polymerization, as described in JP-A-1990-36244.

In the living anion polymerization, there is ordinarily used an initiator such as organic lithium compound, organic sodium compound or the like. Preferred initiators are, for example, alkyl lithiums such as n-butyllithium, sec-butyllithium, tert-butyllithium and the like. As the hydrocarbon type solvents used, there can be mentioned, for example, hexane, heptane, methylcyclopentane, cyclohexane, benzene, toluene, xylene, 2-methylbutene-1 and 2-methylbutene-2. The living anion polymerization may be conducted batch-wise or continuously. The polymerization temperature is ordinarily in a range of 0 to 120°C.

In the living anion polymerization, by also using, for example, an ether, a tertiary amine, or an alkoxide, phenoxide or sulfonate of an alkali metal (e.g. sodium or potassium) and appropriately selecting its kind, use amount, etc., it is possible to easily control, in the hydrogenated block copolymer obtained, the proportion of the number of conjugated diene units having an olefinically unsaturated bond in the side chain, to the total number of conjugated diene units.

It is also possible to allow the polymer obtained to have an increased molecular weight, by adding a polyfunctional coupling agent or crosslinking agent right before the completion of polymerization. As such a coupling agent, there can be mentioned, for example, divinylbenzene, 1,2,4-trivnylbenzene, epoxidized 1,2-polybutadiene, epoxidized soybean oil, epoxidized linseed oil, benzene-1,2,4-triisocyanate, diethyl oxalate, diethyl malonate, diethyl adipate, dioctyl adipate, dimethyl phthalate, diethyl phthalate, diethyl terephthalate, pyromellitic dianhydride, diethyl carbonate, 1,1,2,2-tetrachloroethane, 1,4-bis(trichloromethyl)benzene, trichlorosilane, methyltrichlorosilane, butyltrichlorosilane, tetrachlorosilane, (dichloromethyl)trichlorosilane, hexachlorodisilane, tetraethoxysilane, tetrachlorotin and 1,3-dichloro-2-propanone. Of these, preferred are divinylbenzene, epoxidized 1,2-polybutadiene, trichlorosilane, methyltrichlorosilane and tetrachlorosilane. As the crosslinking agent, there can be mentioned divinylbenzene, adipic acid diester, epoxidized liquid butadiene, epoxidized soybean oil, epoxidized linseed oil, tolylene diisocyanate, diphenylmethane diisocyanate, 1,2,4-benzene triisocyanate, etc.

The second hydrogenated block copolymer (D) can be obtained, for example, by hydrogenating a block copolymer having at least two (1) vinyl aromatic polymer blocks and at least one (2) conjugated diene polymer block or copolymer block of a vinyl aromatic compound and a conjugated diene compound, in a hydrocarbon type solvent in the presence of a hydrogenation catalyst at a hydrogen pressure of 1 to 100 kg/cm² at a temperature of -10 to 150°C.

As the hydrogenation catalyst, there can be used compounds each containing any of Ib, IVb, Vb, VIb, VIIb and VIII group metals of periodic table; for example, compounds each containing Ti, V, Co, Ni, Zr, Ru, Rh, Pd, Hf, Re or Pt atom. Specifically, there can be mentioned, for example, metallocene type compounds of Ti, Zr, Hf, Co, Ni, Pd, Pt, Ru, Rh, Re or the like; loaded heterogeneous system catalysts obtained by loading a metal such as Pd, Ni, Pt, Rh, Ru or the like on a carrier such as carbon, silica, alumina, diatomaceous earth or the like; homogenous system Ziegler type catalysts which are each a combination of an organic salt or acetylacetone salt of a metal element (e.g. Ni or Co) and a reducing agent (e.g. an organic aluminum); organic metal compounds or complexes of Ru, Rh or the like; and a fullerene or carbon nanotube having hydrogen occluded. Of these, metallocene compounds each containing any of Ti, Zr, Hf, Co and Ni are preferred because hydrogenation is made possible in a homogeneous system in an inert organic solvent. Metallocene compounds each containing any of Ti, Zr and Hf are more preferred. A hydrogenation catalyst obtained by reacting a titanocene compound with an alkyllithium is particularly preferred because it is inexpensive and is a very useful catalyst industrially. The above catalysts may be used in one kind or in combination of two or more kinds. After the hydrogenation, the residual catalyst is removed as necessary or an age resister of phenol type or amine type is added; then, a hydrogenated diene-based copolymer is isolated from the hydrogenated diene-based copolymer solution. This isolation of the hydrogenated diene-based copolymer can be conducted, for example, by a method of adding acetone, an alcohol or the like to the hydrogenated diene-based copolymer solution to give rise to sedimentation or by a method of pouring the hydrogenated diene-based copolymer solution into hot water with stirring and then distilling off the solvent.

In the second hydrogenated block copolymer (D), the olefinically unsaturated bonds in the side chain or main chain contained in the conjugated diene units of the block copolymer comprising at least two (1) vinyl aromatic polymer block and at least one (2) conjugated diene polymer block or copolymer block of a vinyl aromatic compound and a conjugated diene compound are hydrogenated. The hydrogenation degree in the second hydrogenated block copolymer (D) is preferably 70% or more. Here, the hydrogenation degree is a value indicating the proportion of the number of hydrogenated olefinically unsaturated bonds in side chain or main chain, to the number of olefinically unsaturated bonds in side chain or main chain of before-hydrogenation conjugated diene units, and is more preferably 90% or more, particularly preferably 95% or more. The hydrogenated diene-based polymer may be cross-linked. The crosslinking of the hydrogenated diene-based polymer can be conducted by a conventional known method.

The toluene solution of 5% by mass of the hydrogenated block copolymer gives a viscosity of preferably 5 mPa·s or more, more preferably 10 mPa·s or more, at 30°C.
The toluene solution viscosity is an index of molecular weight and, when the toluene solution of 5% by mass of the hydrogenated block copolymer gives a viscosity of less than 5 mPa·s at 30°C, the resulting thermoplastic elastomer composition tends to be low in mechanical strength.

As specific examples of the second hydrogenated block copolymer (D), there can be mentioned hydrogenated styrene-butadiene block copolymer, hydrogenated styrene-isoprene block copolymer, hydrogenated styrene-butadiene-isoprene block copolymer and hydrogenated butadiene block copolymer. Of these, preferred are hydrogenated styrene-butadiene block copolymer and hydrogenated styrene-butadiene-isoprene block copolymer.
As commercial products of such a hydrogenated diene-based polymer, there can be mentioned Septon (trade name) (preferred grades are 4044, 4055 and 4077 in the case of hydrogenated styrene-butadiene-isoprene block copolymer, and 8007, 8004 and 8006 in the case of hydrogenated styrene-butadiene block copolymer) and Hybrar (trade name) both produced by Kuraray Co., Ltd.; Tuftec (trade name) produced by Asahi Kasei Corporation (preferred grades are H1052, H1031, H1041, H1051, H1062, H1943, H1913, H1043, H1075 and JT-90P); Dynaron (trade name) produced by JSR Corporation (preferred grades are 8600 and 8900 in the case of hydrogenated styrene-butadiene block copolymer); Clayton (trade name) produced by Clayton Polymers Corporation (preferred grades are G1650, G1651, G1652 and G1657 in the case of hydrogenated styrene-butadiene block copolymer); and so forth.

### Proportions of components (A1) to (D) or (X) to (D)

As to the proportions of the components (A1) to (D) or (X) to (D), the amounts of the components (A1) and (X) are each 20 to 90 parts by mass, preferably 25 to 85 parts by mass, more preferably 30 to 80 parts by mass, relative to 100 parts by mass of the total of (A1), (B), (C) and (D) or the total of (X), (B), (C) and (D). Similarly, the amount of the crystalline polyethylene type resin (B) is 1 to 40 parts by mass, preferably 3 to 35 parts by mass, more preferably 5 to 30 parts by mass. The amount of the first hydrogenated block copolymer (C) is 1 to 30 parts by mass, preferably 3 to 25 parts by mass, more preferably 5 to 20 parts by mass. The amount of the second hydrogenated block copolymer (D) is 1 to 40 parts by mass, preferably 3 to 35 parts by mass, more preferably 5 to 30 parts by mass. When the proportion of each of the components (A1) to (D) or (X) to (D) is out of the above range, the thermoplastic elastomer composition tends to be inferior in rubber elasticity, flexibility, moldability and, when containing a softening agent, in oil bleeding.

### (E: E1,E2) Mineral oil type softening agent

The thermoplastic elastomer composition of the present invention may contain a mineral oil type softening agent.
The mineral oil type softening agent used in the present invention is ordinarily a mixture of aromatic ring, naphthenic ring and paraffinic chain. The softening agent is classified into a paraffinic oil wherein the carbon atoms of paraffinic chain are 50% or more of the total carbon atoms, a naphthenic oil wherein the carbon atoms of naphthenic ring are 30 to 45% of the total carbon atoms, and an aromatic oil wherein the carbon atoms of aromatic ring are 30% or more of the total carbon atoms. In the present invention, the paraffinic oil is preferred and particularly a hydrogenated paraffinic oil is preferred.
The weight-average molecular weight of the softening agent is preferably 300 to 2,000, particularly preferably 500 to 1,500; the dynamic viscosity at 40°C is preferably 20 to 800 cSt, particularly preferably 50 to 600 cSt; the pour point is preferably -40 to 0°C, particularly preferably -30 to 0°C.
As to the commercial products of the mineral oil type softening agent, there can be mentioned, as the paraffinic oil, Diana Process Oil PW 90, PW 100, PW 380, PS 32 and PS 90, all produced by Idemitsu Kosan Co., Ltd.; as the naphthenic oil, Fukkol FLEX # 1060N, # 1150N, # 1400N, # 2040N and # 2050N, all produced by Fuji Kosan Co., Ltd.; as the aromatic oil, AROMA # 1, # 3 and # 5, all produced by Fuji Kosan Co., Ltd. Of these, Diana Process Oil PW 90, PW 100 and PW 380 (all are paraffinic oils) produced by Idemitsu Kosan Co., Ltd. are used preferably.
The amount of the mineral oil type softening agent (E1) used is 0 to 400 parts by mass, preferably 0 to 350 parts by mass, more preferably 0 to 300 parts by mass relative to 100 parts by mass of the mixture of the thermal plastic elastomers [the total of (A1) and (B)]; and is 0 to 300 parts by mass, preferably 0 to 250 parts by mass, more preferably 0 to 200 parts by mass relative to 100 parts by mass of the mixture of the thermal plastic elastomers [the total of (X) and (B)].

The mineral oil type softening agent may be added to the EAO-based copolymer (A1) or the oil-extended rubber (X) during the production (polymerization), or may be added during the dynamic melting and kneading of (A1) to (D) or (X) to (D), or may be added during melting and kneading after the dynamic melting and kneading of (A1) to (D) or (X) to (D). Thus, there is no particular restriction as to the method of addition of the mineral oil type softening agent.

### Various additive (1)

The thermoplastic elastomer composition may contain a high-molecular compound selected from the thermoplastic resins and rubbers shown below and various additives also shown below, in amounts which do not hinder the mechanical strength, flexibility and moldability of the molded article finally obtained, of the present invention.

There is no particular restriction as to the high-molecular compound, and various such compounds can be used. As specific examples thereof, there can be mentioned ionomer, aminoacrylamide polymer, polyethylene or polyethylene grafted with maleic anhydride, polyisobutylene, ethylene-vinyl chloride polymer, ethylene-vinyl alcohol polymer, ethylene-vinyl acetate copolymer, polyethylene oxide, ethylene-acrylic acid copolymer, polypropylene or polypropylene grafted with maleic anhydride, atactic poly-1-butene homopolymer, α-olefin copolymer resin [copolymer between propylene (50 mole % or more) and other α-olefin (e.g. ethylene, 1-butene, 1-pentene, 1-hexene, 4-methyl-1-pentene, 1-octene or 1-decene), or copolymer between 1-butene (50 mole % or more) and other α-olefin (e.g. ethylene, propylene, 1-pentene, 1-hexene, 4-methyl-1-pentene, 1-octene or 1-decene), polyisobutylene or polyisobutylene grafted with maleic anhydride, chlorinated polypropylene, 4-methylpentene-1 resin, polystyrene, ABS resin, ACS resin, AS resin, AES resin, ASA resin, MBS resin, acrylic resin, methacrylic resin, vinyl chloride resin, vinylidene chloride resin, polyamide resin, polycarbonate, acrylic resin, methacrylic resin, vinyl chloride resin, vinylidene chloride resin, vinyl alcohol resin, vinyl acetal resin, methyl methacrylate resin, fluoroplastic, polyether resin, polyethylene terephthalate, poly(acrylic acid ester), polyamide resin, ethylene·α-olefin copolymer rubber or polymer obtaining by graft-polymerizing maleic anhydride thereon, ethylene·α-olefin·non-conjugated diene copolymer rubber, styrene·butadiene rubber or hydrogenated styrene·butadiene rubber, polymer obtained by graft-polymerizing maleic anhydride on hydrogenated styrene·butadiene rubber, butadiene rubber or hydrogenated butadiene rubber, polymer obtained by graft-polymerizing maleic anhydride on hydrogenated butadiene rubber, isobutylene-isoprene copolymer, isoprene rubber or hydrogenated isoprene rubber, polymer obtained by graft-polymerizing maleic anhydride on hydrogenated isoprene rubber, styrene·isoprene rubber or hydrogenated styrene·isoprene rubber, polymer obtained by graft-polymerizing maleic anhydride on hydrogenated styrene·isoprene rubber, nitrile rubber or hydrogenated nitrile rubber, acrylic rubber, silicone rubber, fluororubber, butyl rubber, natural rubber, chlorinated polyethylene type thermoplastic elastomer, syndiotactic 1,2-polybutadiene, hydrogenated styrene·butadiene block copolymer, hydrogenated styrene·isoprene conjugated diene-based block copolymer, simple blending type olefin-based thermoplastic elastomer, in-plant type olefin-based thermoplastic elastomer, dynamically crosslinked type olefin-based thermoplastic elastomer, polyvinyl chloride type thermoplastic elastomer, polyurethane type thermoplastic elastomer, polyester type thermoplastic elastomer, polyamide type thermoplastic elastomer, and fluorine-based thermoplastic elastomer. Preferred are crystalline or non-crystalline α-olefin-based polymer such as polypropylene, propylene·butene-1 copolymer resin and the like.
Of these high-polymeric compounds, crystalline polyproylene is preferred particularly.

These high-polymeric compounds can be used singly in one kind or in combination of two or more kinds.
The proportion of the high-polymeric compound used is 300 parts by mass or less, preferably 1 to 200 parts by mass relative to 100 parts by mass of the particular functional group-containing copolymer. The proportion when the high-polymeric compound is a crystalline polypropylene, is preferably 50 parts by mass or less, more preferably 1 to 20 parts by mass, particularly preferably 1 to 10 parts by mass relative to 100 parts by mass of the particular functional group-containing copolymer.

### Various additives (2)

The thermoplastic elastomer composition may contain various additives such as the followings: antioxidant, antistatic agent, anti-blocking agent, sealing property improver, lubricant, age resister, heat stabilizer, weather-resist agent, metal deactivator, stabilizer (e.g. ultraviolet absorber, light stabilizer or copper-harm inhibitor), germicidal and mildewcidal agent, dispersing agent, plasticizer, nucleating agent for crystallization, flame retardant, tackifier, foaming aid, coloring agent (e.g. titanium oxide or carbon black), pigment, metal powder (e.g. ferrite), inorganic fiber (e.g. glass fiber or metal fiber), organic fiber (e.g. carbon fiber or aramid fiber), composite fiber, filler [e.g. inorganic whiskers (e.g. potassium titanate whiskers), glass beads, glass balloon, glass flakes, asbestos, mica, calcium carbonate, talc, wet silica, dry silica, alumina, alumina silica, calcium silicate, hydrotalcite, kaolin, diatomaceous earth, graphite, pumice, ebonite powder, cotton flock, cork powder, barium sulfate, fluoroplastic or polymer beads] or mixture thereof, filler (e.g. polyolefin wax, cellulose powder, rubber powder or wood powder), and low-molecular polymer.

### Method for preparation of thermoplastic elastomer composition

The thermoplastic elastomer composition of the present invention can be obtained by feeding components (A1) to (E1) or (X) to (E1) into a continuous or closed melting and kneading machine and subjecting them to a dynamic heat treatment.

The "dynamic heat treatment" means shear force application and heating. This dynamic heat treatment can be conducted, for example, by using a melting and kneading machine, and the treatment conducted in the melting and heating machine may be batch-wise or continuous.
As the melting and kneading machine, there can be mentioned, for example, open type mixing roll, closed type Banbury mixer, single-screw extruder, double-screw extruder, continuous kneader and pressure kneader. Of these, preferred are continuous machines (single-screw extruder, double-screw extruder and continuous kneader) from the standpoints of economy, treatment efficiency, etc.).

As to the continuous machine, there is no particular restriction as long as melting and kneading can be conducted in the presence of the thermoplastic elastomer composition. Of the above-mentioned continuous machines, a double-screw extruder is preferably used and a double-screw extruder having a L/D (ratio of screw effective length L and outer diameter D) of preferably 30 or more, more preferably 36 to 60 is more preferred. As the double-screw extruder, there can be used, for example, any double-screw extruder such as one wherein two screws mesh or do not mesh with each other; however, a double-screw extruder wherein two screws rotate in the same direction and mesh with each other, is more preferred.

As such a double-screw extruder, there can be mentioned CM (produced by IKEGAI CORP.), KTX (produced by Kobe Steel, Ltd.), TEX (produced by The Japan Steel Works, Ltd.), TEM (produced by Toshiba Machine Co., Ltd.), ZSK (produced by Warner Corporation) (they are trade names), etc.
As the continuous kneader, there is preferably used a continuous kneader having a L/D (ratio of screw effective length L and outer diameter D) of preferably 5 or more, more preferably 10. As the continuous kneader, there can be used, for example, any continuous kneader such as one wherein two screws mesh or do not mesh with each other; however, a continuous kneader wherein two screws rotate in opposite directions and mesh with each other, is more preferred. As such a continuous kneader, there can be mentioned Mixtrons KTX, LCM and NCM (produced by Kobe Steel, Ltd.), CIM and CMP (produced by The Japan Steel Works, Ltd.) (they are trade names), etc.
The above-mentioned continuous machines may be used by connecting two or more machines.

The temperature of the dynamic heat treatment is 120 to 350°C, preferably 150 to 290°C, and the time of the treatment is 20 seconds to 320 minutes, preferably 30 seconds to 25 minutes. The shear force applied to the mixture is 10 to 20,000/sec, preferably 100 to 10,000/sec in terms of shear rate.

### Molded article of thermoplastic elastomer composition

There is no particular restriction as to the method for producing a molded article of thermoplastic elastomer composition, and there can be suitably used, for example, extrusion molding, calendering, solution casting, injection molding, vacuum molding, powder slush molding and hot pressing.
The molded article may be a molded article laminated or bonded with a rubber, a plastic, a thermoplastic elastomer composition other than the present invention composition, a glass, a metal, a cloth, a wood or the like.

As the rubber, there can be mentioned ethylene·α-olefin copolymer rubber or polymer obtained by graft-polymerizing maleic anhydride on ethylene·α-olefin copolymer rubber, ethylene·α-olefin·non-conjugated diene copolymer rubber, styrene·butadiene rubber, butadiene rubber obtained by using a Ni catalyst, isoprene rubber, nitrile rubber or hydrogenated nitrile rubber, acrylic rubber, silicone rubber, fluororubber, butyl rubber, natural rubber, etc.
As the plastic, there can be mentioned ionomer, aminoacrylamide polymer, polyethylene or polyethylene grafted with maleic anhydride, polyisobutylene, ethylene-vinyl chloride polymer, ethylene-vinyl alcohol polymer, ethylene-vinyl acetate polymer, polyethylene oxide, ethylene-acrylic acid copolymer, polypropylene or polypropylene grafted with maleic anhydride, polyisobutylene or polyisobutylene grafted with maleic anhydride, chlorinated polypropylene, 4-methylpentene-1 resin, polystyrene, ABS resin, ACS resin, AS resin, AES resin, ASA resin, MBS resin, acrylic resin, methacrylic resin, vinyl chloride resin, vinylidene chloride resin, polyamide resin, polycarbonate, acrylic resin, methacrylic resin, vinyl chloride resin, vinylidene chloride resin, vinyl alcohol resin, vinyl acetal resin, methyl methacrylate resin, fluoroplastic, polyether resin, polyethylene terephthalate, poly(acrylic acid ester), polyamide resin, polyurethane, polyimide, polyurea resin, epoxy resin, phenolic resin, urea resin, polybutene-1, methylpentene resin, polyacrylonitrile, etc.

As the thermoplastic elastomer, there can be mentioned chlorinated polyethylene type thermoplastic elastomer, syndiotactic 1,2-polybutadiene, simple blend type olefin-based thermoplastic elastomer, in-plant type olefin-based thermoplastic elastomer, dynamically cross-linked type olefin-based thermoplastic elastomer, polyvinyl chloride type thermoplastic elastomer, polyurethane type thermoplastic elastomer, polyester type thermoplastic elastomer, polyamide type thermoplastic elastomer, fluorine-based thermoplastic elastomer, hydrogenated styrene·butadiene rubber, hydrogenated styrene·butadiene rubber grafted with maleic anhydride, hydrogenated butadiene rubber, hydrogenated butadiene rubber grafted with maleic anhydride, hydrogenated isoprene rubber, hydrogenated isoprene rubber grafted with maleic anhydride, hydrogenated styrene·isoprene rubber, hydrogenated styrene·isoprene rubber grafted with maleic anhydride, hydrogenated styrene·isoprene rubber, hydrogenated styrene·isoprene rubber grafted with maleic anhydride, hydrogenated styrene block copolymer, hydrogenated styrene·isoprene block copolymer, etc.

As the metal, there can be mentioned, for example, stainless steel, aluminum, iron, copper, nickel, zinc, lead, tin, and alloys (e.g. nickel-zinc alloy, iron-zinc alloy and lead-tin alloy) used in automobiles, ships, household electric appliances, etc.

### Examples

The present invention is described more specifically below by way of Examples. However, the present invention is in no way restricted to the following Examples as long as the gist of the present invention is maintained.
In the Examples, parts and % are based on mass unless otherwise specified.
Measurements in the Examples were made by the following methods.

Evaluation of thermoplastic elastomer:
The flow property of the thermoplastic elastomer composition obtained was measured as melt flow rate according to JIS K 7210, at 230°C at a load of 98N.
The thermoplastic elastomer obtained was evaluated, using its injection-molded sheet, for hardness, tensile strength at break, tensile elongation at break and compression set, according to the following methods. The mineral oil type softening agent-containing thermoplastic elastomer composition obtained was evaluated for oil bleeding, according to the following method.

Hardness:
Measured as an indication of flexibility according to JIS K 6253.
Tensile strength at break and tensile elongation at break:
Measured according to JIS K 6251.
Compression set:
Measured as an indication of rubber elasticity according to JIS K 6262 under two conditions of 70°C and 22 hours, and 80°C and 22 hours.
Oil bleeding:
Evaluated visually using a test piece for compression set (according to JIS K 6262) under the conditions of 80°C, 50% compression and 72 hours.
   ○: No bleeding of mineral oil type softening agent.
   X: Bleeding of mineral oil type softening agent.

Extrudability:
Using a laboratory plastomill extruder (produced by TOYO SEIKI Ltd., outer diameter = 20 mm, L/D = 25), sheet extrusion (die portion width: 25 mm, thickness: 1.5 mm) was conducted under the following conditions. The appearance of the extrudate (sheet) was evaluated visually. A case when the sheet had a smooth surface and an edge, was rated as ○, and all other cases were rated as X.
Cylinder C1 temperature: set at 180°C.
Cylinder C2 temperature: set at 190°C.
Cylinder C3 temperature: set at 210°C.
Die temperature: set at 205°C.
Screw rotation rate: 40 rpm

### Example 1 (Preparation of thermoplastic elastomer composition)

The EAO-based copolymer (A) or oil-extended copolymer rubber (X), crystalline polyethylene resin (B), first hydrogenated block copolymer (C), second hydrogenated block copolymer (D) and other additives, all shown below were fed into a pressure kneader (capacity: 10 liters, produced by Moriyama Co.) beforehand heated at 150°C, in the proportions shown in Table 1. They were kneaded at 40 rpm (shear rate: 200/sec) for 15 minutes until the crystalline polyethylene resin was melted and all the components were dispersed uniformly.
The molten composition obtained was pelletized by a Feeder Ruder (produced by Moriyama Co.) at a temperature set at 200°C.
The results of evaluation are shown in Table 1.

### (1) EAO-based copolymer (A) and oil-extended EAO-based copolymer (X)

· Non-oil-extended copolymer rubber (A1):
· ethylene/propylene/5-ethylidene-2-norbornene terpolymer, ethylene content: 66% by mass, 5-ethylidene-2-norbornene content: 4.5% by mass, intrinsic viscosity: 2.8
· Oil-extended copolymer rubber (X): ethylene/propylene/5-ethylidene-2-norbornene terpolymer, ethylene content: 66% by mass, 5-ethylidene-2-norbornene content: 4.5% by mass, intrinsic viscosity: 4.6, paraffinic oil type softening agent content: 50% by mass

### (2) Crystalline polyethylene resin (B)

Linear low-density polyethylene (LLDPE) [Novatec LL UF 423 (trade name), produced by Japan Polychem Corporation], crystallinity: 40%, melting point by DSC: 124°C, melt flow rate (190°C, 21 N): 2.0 g/10 min.

### (3) First hydrogenated block copolymer (C)

Obtained by the following method.
Into a reactor (internal volume: 50 liters) purged with nitrogen were fed cyclohexane (24 kg), tetrahydrofuran (1 kg), 1,3-butadiene (1,200 g) and n-butyllithium (3.3 g). Adiabatic polymerization was conducted from 70°C. After the completion of the reaction, the system temperature was controlled at 5°C, and tetrahydrofuran (340 g) and 1,3-butadiene (2,800 g) were added for adiabatic polymerization. 30 minutes later, methyldichlorosilane (2.3 g) was added and a reaction was conducted for 15 minutes.

After the completion of the reaction, hydrogen gas was fed at a pressure of 0.4 Mpa-G, and stirring was made for 20 minutes to react the hydrogen with the lithium (active as a living anion) of polymer end (the lithium was converted into lithium hydride).
The reaction mixture was controlled at 90°C, tetrachlorosilane (7.2 g) was added, stirring was made for about 20 minutes, then a hydrogenation catalyst composed mainly of a titanocene compound was added, and a hydrogenation reaction was conducted for 2 hours at a hydrogen pressure of 0.8 Mpa.
When the absorption of hydrogen was over, the reaction mixture was returned to normal temperature and normal pressure, withdrawn from the reactor, and poured into water with stirring. The mixture was subjected to steam distillation to remove the solvent to obtain a hydrogenated diene-based block copolymer of A-B-A structure (A is a polybutadiene low in 1,2-vinyl configuration content and B is a polybutadiene high in 1,2-vinyl configuration content).

In the hydrogenated conjugated diene-based block copolymer obtained, the hydrogenation degree was 99% and the weight-average molecular weight was 300,000. In the polymer before hydrogenation, the vinyl configuration content of the first stage polybutadiene block A was 15% (per one end) and the vinyl configuration content of the second stage polybutadiene block B was 78%. The polymer after hydrogenation had a melt flow rate of 2.5 g/10 min as measured at 230°C at 21.2 N.

### (4) Second hydrogenated block copolymer (D)

(D-1) Styrene/butadiene/isoprene hydrogenated diene-based copolymer, produced by Kuraray Co., Ltd., Septon 4077 (trade name), styrene content: 30% by mass, specific gravity: 0.91, hydrogenation degree: 98%, toluene solution viscosity (30°C, concentration: 5% by mass): 300 mPa·s, melt flow rate (230°C, 21.2 N): no fluidity and unable to measure. (D-2) Styrene/butadiene hydrogenated diene-based copolymer, produced by Kuraray Co., Ltd., Septon 8006 (trade name), styrene content: 30% by mass, specific gravity: 0.91, hydrogenation degree: 98%, toluene solution viscosity (30°C, concentration: 5% by mass): 42 mPa·s, melt flow rate (230°C, 21.2 N): no fluidity and unable to measure.

### (5) Other additives

· Crystalline polypropylene: BC5CW (trade name) produced by Japan Polychem Corporation, crystallinity: 70%
· Paraffinic oil type softening agent: Diana Process Oil PW 380 (trade name) produced by Idemitsu Kosan Co., Ltd.
· Age resister: Irganox 1010 (trade name) produced by Ciba Specialty Chemicals K.K.

**Table 1**

| | Examples | | | | Comparative Examples | | | |
|---|---|---|---|---|---|---|---|---|
| | 1 | 2 | 3 | 4 | 1 | 2 | 3 | 4 |
| Non-oil-extended copolymer rubber (A1) | 46 | | | | 100 | 70 | 80 | |
| Oil-extended copolymer rubber (X) | | 55 | 60 | 55 | | | | 70 |
| Crystalline polyethylene resin (B) | 16 | 15 | 20 | 15 | | 30 | | 20 |
| Hydrogenated block copolymer (C) | 18 | 10 | 10 | 10 | | | 20 | 10 |
| Hydrogenated block copolymer (D-1) | 20 | 20 | 10 | | | | | |
| Hydrogenated block copolymer (D-2) | | | | 20 | | | | |
| Crystalline polypropylene | 8 | 2 | 2 | 2 | | | | 2 |
| Mineral oil type softening agent | 10 | | | | | | | |
| Age resister | 0.2 | 0.2 | 0.2 | 0.2 | 0.2 | 0.2 | 0.2 | 0.2 |
| MFR (230°C x 98 N) [g/10 min] | 3 | 3 | 4 | 2 | | 4 | | 8 |
| Hardness (Duro A) | 77 | 64 | 67 | 64 | 55 | 75 | 62 | 65 |
| Tensile strength at break [Mpa] | 12.1 | 12.7 | 11.2 | 11.5 | 3.1 | 7.5 | 4.5 | 7.9 |
| Tensile elongation at break [%] | 920 | 1140 | 1190 | 1130 | 1260 | 940 | 1000 | 1370 |
| Compression set (70°C x 22 hr) [%] | 40 | 36 | 35 | 36 | 100 | 78 | 80 | 41 |
| Compression set (80°C x 22 hr) [%] | 45 | 40 | 40 | 41 | 100 | 85 | 89 | 48 |
| Specific gravity | 0.89 | 0.89 | 0.89 | 0.89 | 0.86 | 0.89 | 0.89 | 0.883 |
| Oil bleeding | ○ | ○ | ○ | ○ | - | - | - | X |
| Extrudability | ○ | ○ | ○ | ○ | X | ○ | X | ○ |

As is clear from Table 1, the thermoplastic elastomer compositions of Examples 1 to 4 are superior in flexibility (hardness), mechanical properties (strength and elongation at break), rubber elasticity (compression set) and oil bleeding resistance. Meanwhile, the thermoplastic elastomer compositions of Comparative examples 1 to 3 are inferior in mechanical strength and rubber elasticity, and Comparative Example 4 containing no component (D) is inferior in mechanical strength and oil bleeding resistance.

### Industrial Applicability

The thermoplastic elastomer composition and the molded article thereof according to the present invention are superior in flexibility and rubber elasticity (impact resilience and compression set) and therefore can be used in the following wide applications. That is, automotive applications such as bumper, mall as exterior trim, gasket for wind shielding, gasket for door shielding, gasket for trunk sealing, roof side rail, emblem, inner panel, door trim and skin material for inner or outer trim (e.g. console box); mar-resistant leather sheets such as weather strip and the like; aircraft and ship applications such as sealing material, skin material for inner or outer trim, and the like; civil engineering and construction applications such as sealing material, skin material for inner or outer trim, water-proof sheet, and the like; general machinery and equipment applications such as sealing material and the like; part for light electric appliances and packing for water pipe; sealing material, skin material, housing, etc. of fuel cell stack; pad for railroad truck; roll and cleaning blade for information appliances; film for electronic parts; protective film and sealing material used in production of flat panel display (FPD) for semiconductor, liquid crystal display apparatus, etc.; protective film for images (e.g. picture); decorative film for construction materials; part for medical instruments; electric wire; daily sundries; and ordinary products such as sporting goods and the like.

## Claims

1. A thermoplastic elastomer composition which comprises:
(A1) an ethylene·α-olefin-based copolymer: 20 to 90 parts by mass,
(B) a crystalline polyethylene type resin: 1 to 40 arts by mass,
(C) a hydrogenated block copolymer obtained by hydrogenating a block copolymer comprising, at each of the two ends, a conjugated diene polymer block having a 1,2-vinyl configuration content of 25% or less and, as the intermediate block, a conjugated diene polymer block having a 1,2-vinyl configuration content of more than 25%: 1 to 30 parts by mass,
(D) a hydrogenated block copolymer obtained by hydrogenating a block copolymer comprising at least two (1) vinyl aromatic polymer blocks and at least one (2) conjugated diene polymer block or copolymer block of a vinyl aromatic compound and a conjugated diene compound: 1 to 40 parts by mass [the total of (A1), (B), (C) and (D) are 100 parts by mass], and
(E1) a mineral oil type softening agent: 0 to 400 parts by mass.

2. A thermoplastic elastomer composition which comprises:
(X) an oil-extended rubber comprising 20 to 80% by mass of (A2) an ethylene·α-olefin-based copolymer and 20 to 80% by mass of (E2) a mineral oil type softening agent [(A2) + (E2) = 100% by mass]: 20 to 90 parts by mass,
(B) a crystalline polyethylene type resin: 1 to 40 parts by mass,
(C) a hydrogenated block copolymer obtained by hydrogenating a block copolymer comprising, at each of the two ends, a conjugated diene polymer block having a 1,2-vinyl configuration content of 25% or less and, as the intermediate block, a conjugated diene polymer block having a 1,2-vinyl configuration content of more than 25%: 1 to 30 parts by mass,
(D) a hydrogenated block copolymer obtained by hydrogenating a block copolymer comprising at least two (1) vinyl aromatic polymer blocks and at least one (2) conjugated diene polymer block or copolymer block of a vinyl aromatic compound and a conjugated diene compound: 1 to 40 parts by mass [the total of (X), (B), (C) and (D) are 100 parts by mass], and
(E1) a mineral oil type softening agent: 0 to 400 parts by mass.

3. A thermoplastic elastomer composition according to Claim 1 or 2, which has been subjected to a dynamic heat treatment.

4. A thermoplastic elastomer composition according to any of Claims 1 to 3, which further comprises a crystalline polypropylene.

5. A thermoplastic elastomer composition according to any of Claims 1 to 4, wherein each of the ethylene·α-olefin-based copolymers (A1) and (A2) shows an intrinsic viscosity [η] of 3.5 to 6.8 dl/g when measured at 135°C in a decalin solvent.

6. A thermoplastic elastomer composition according to any of Claims 1 to 5, wherein the hydrogenated block copolymer (C) contains 5 to 90 parts by mass of the end blocks and 10 to 95 parts by mass of the intermediate block when the total of the end blocks and the intermediate block is taken as 100 parts by mass, at least 80% of the conjugated diene double bonds present before hydrogenation is saturated in the hydrogenated block copolymer (C), and the hydrogenated block copolymer (C) has a number-average molecular weight of 50,000 to 700,000.

7. A thermoplastic elastomer composition according to any of Claims 1 to 5, wherein the hydrogenated block copolymer (D) is constituted by (F) a polymer block composed of a vinyl aromatic compound, and (G) a polymer block composed of structural units derived from isoprene and butadiene, in which 80% or more of the unsaturated bonds in chain is hydrogenated and/or (H) a polymer block composed of butadiene, in which 80% or more of the unsaturated bonds in chain is hydrogenated, and is a hydrogenated block copolymer of (F)-(G)-(F) type or (F)-(H)-(F) type.

8. A molded article obtained by molding a thermoplastic composition set forth in any of Claims 1 to 7.
